# EUROPEAN PATENT SPECIFICATION

(11) **EP 1 567 311 B1**
(45) Date of publication and mention of the grant of the patent: **04.07.2012**
(21) Application number: 03812108.3
(22) Date of filing: 05.12.2003
(51) Int. Cl.: B27K 3/38, B27K 3/40, A01N 53/00

(54) **SURFACE TREATMENT FOR WOOD AND WOOD PRODUCTS**
OBERFLÄCHENBEHANDLUNG FÜR HOLZ UND HOLZPRODUKTE
TRAITEMENT SUPERFICIEL POUR BOIS ET PRODUITS EN BOIS

(30) Priority: 05.12.2002 AU 2002953128
(43) Date of publication of application: 31.08.2005
(73) Proprietor: Osmose (Australia) Pty Ltd, Botany, Mascot NSW 1460 (AU)
(72) Inventor: ROMERO AMAYA, Javier Francisco, Peachtree City, Georgia 20269 (US)
(74) Representative: Hamer, Christopher K.
(86) International application number: PCT/AU2003/001621
(87) International publication number: WO 2004/050316

(56) References cited:
- EP-A- 1 018 413
- CA-A- 2 321 353
- CA-A- 2 400 425
- US-A- 5 714 507
- DATABASE WPI Week 200006, Derwent Publications Ltd., London, GB; Class C03, AN 2000-065312, XP002995499 & JP 11 207 706 A (YUKO YAKUHIN KOGYO KK) 03 August 1999
- DATABASE WPI Week 199605, Derwent Publications Ltd., London, GB; Class A97, AN 1996-045270, XP002995500 & JP 07 309 701 A (SHINTON TORYO KK) 28 November 1995

## Description

### FIELD OF THE INVENTION

The invention pertains to wood treatment and more particularly to surface treatments of wood using synthetic pyrethroids.

### BACKGROUND OF THE INVENTION

Bifenthrin is a synthetic pyrethroid insecticide/acaracide that is classified as a non-cyano pyrethroid. The active ingredient is efficacious to target pests through both contact and stomach action. As with most synthetic pyrethroids bifenthrin is active against a wide range of pests including Coleoptera, Diptera, Heteroptera, Hymenoptera, Homoptera, Isoptera, Lepidoptera, Orthoptera as well a number of species of Acarina. Bifenthrin is currently registered in a number of countries throughout the world for the control of a wide range of pests.

Bifenthrin is used extensively in many industries. For example: Cotton, grain, turf, pest control, flower, home garden and mosquito control. However has not been used in the timber industry.

Tests have demonstrated that when using standard practice in the timber industry, very low rates of bifenthrin are required to protect timber against ***Coptotermes acinaciformis**,* the most economically important termite species in Australia and ***Mastotermes darwiniensis**,* the most voracious in Australia and around the world. The rates are 5 and 20 g/m3 respectively.

Standard treatment methods in Australia and around the world currently require some penetration into the timber by the preservative. This can be achieved by vacuum pressure, vacuum-vacuum systems that require a treatment vessel and expensive peripheral and computerized equipment. The process time required to treat the timber varies depending on the product but takes at least 45 minutes to treat wood. Penetration of preservatives can also be achieved by diffusion, a process which involves less expensive equipment but requires much more time and higher levels of stock holding. Wood moisture content is one of the most important parameters in controlling diffusion times. Wet wood is required to achieve diffusion within commercial expectancy. Full penetration of 90 mm thick radiata pine green sapwood can be achieved between 4 to 8 weeks.

### OBJECTS AND SUMMARY OF THE INVENTION

The object of the present invention to promote the use of bifenthrin for the surface treatment of radiata pine sapwood against Coptotermes acinaciformis and Mastotermes darwiniensis.

### BEST MODE AND OTHER EMBODIMENTS OF THE INVENTION

Until this invention, adequately protecting timber against termite attack required a treatment which provided significant penetration of the sapwood. This was the case due to the fact that other available active ingredients degraded very quickly when exposed to increased temperature and Ultra Violet (UV) light. The penetration was required to protect the active ingredient ("active") from the degradation. The most common used active in the 1990's which penetrated the timber was Permethrin. Permethrin has been shown to degrade when exposed to temperatures above 25 degrees centigrade and has a very low resistance to UV light. Thus, when using Permethrin, it was required to penetrate into the timber otherwise the product would degrade and not protect the timber. Other actives which have been trialed in similar applications such as Deltamethrin were found to cause occupational health and safety ("OH&S") problems at both the treating site and construction site and also degrade rapidly when exposed to UV light. In OH&S studies conducted in 1998-1999 using timber treated with Deltamethrin, all workers who handled the treated timber complained of a parasthesia or skin irritation. This problem was so severe that it made the use of Deltamethin unviable.

Due to the chemical composition of Bifenthrin, it has been confirmed through extensive OH&S testing that exposure to Bifenthrin treated timber does not produce any skin irritation. Extensive testing done with Bifenthrin showed that significant penetration was not required to protect the active against degradation through exposure to either UV or heat. This increased stability together with the repellent effects of Bifenthrin combined to allow only a superficial treating of the timber where the need for significant penetration is not required.

Other attributes of Bifenthrin which allow it to be used in such superficial applications are its ability to form strong bonds to the timber and the fact that Bifenthrin is virtually insoluble in water. The bonding co-efficient of Bifenthrin is significantly greater than that of Permethrin. These two attributes of bonding & water insolubility, together with the abovementioned stability when exposed to temperature and UV result in the chemical staying on the timber when exposed to rain, sunlight, temperature or handling. No other chemicals used in the past have such characteristics which would allow a mere superficial treatment.

Recent studies have demonstrated that applying bifenthrin superficially by very short dipping (4 seconds) or spraying at very low rates to radiata pine sapwood of commercial sizes protects the timber against termite attack. The rates required to achieve protection are 4 and 23 g/m3 applied on the surface of 35 x 90 mm radiata pine for Coptotermes acinaciformis and Mastotermes darwiniensis respectively. These studies were conducted using the drum test described by the AWPA protocols. Table 1 shows the evaluation scale used during the inspection of specimens tested. Table 2 and 3 shows the results of the inspection of specimens exposed to Mastotermes and Coptotermes respectively.

**Table 1**

| Evaluation scale for radiata pine samples exposed to termites in the field | |
|---|---|
| Rating | Condition of the specimen |
| 1 | Sound |
| 2 | Superficial attack-grazing |
| 3 | Penetration - >3mm in depth |
| 4 | Attack Slight -10-25 % mass loss |
| 5 | Attack Moderate 25-50 % mass loss |
| 6 | Attack Severe 50-70 % mass loss |
| 7 | Attack Destroyed 75-100 % mass loss |

**Table 2**

| Mean scores for radiata pine commercial samples treated superficially with bifenthrin and exposed to Mastotermes darwiniensis in the field | | | | |
|---|---|---|---|---|
| **Treat** | **No Treatment** | **Mean** | **Range** | **Pass or Fail** |
| 1 | Untreated control | 6.7 | 6-7 | Fail |
| 3 | .007% m/m permethrin (LOSP) | 2.2 | 2-3 | Fail |
| 4 | .013% m/m permethrin (LOSP) | 2.2 | 1-4 | Fail |
| 5 | 0.02% m/m permethrin (LOSP) | 1.8 | 1-2 | Pass |
| 10 | Bifenthrin 4 g/m³ | 3.3 | 2-6 | Fail |
| 11 | Bifenthrin 8 g/m³ | 2.2 | 2-3 | Fail |
| 12 | Bifenthrin 15 g/m³ | 2.0 | 1-3 | Fail |
| 13 | Bifenthrin 23 g/m³ | 1.7 | 1-2 | Pass |
| 17 | Bifenthrin 38 g/m³ | 1.0 | 1-1 | Pass |

**Table 3**

| Mean scores for radiata pine commercial samples treated superficially with bifenthrin and exposed to Coptotermes acinaciformis in the field | | | | |
|---|---|---|---|---|
| **Treat No** | **Treatment** | **Mean** | **Range** | **Pass or Fail** |
| 1 | Untreated control | 7.0 | 7-7 | Fail |
| 2 | Solvent control (white spirit) | 7^{b} | 7-7 | Fail |
| 3 | 3.007% m/m OD permethrin | 2 | 1-3 | Fail |
| 4 | 0.013% m/m OD permethrin | 1.8 | 1-3 | Fail |
| 5 | 3.02% m/m OD permethrin | 1.3 | 1-2 | Pass |
| 8 | Determite 4 g/m³ | 1.0 | 1-1 | Pass |
| 9 | Determite 8 g/m³ | 1.0 | 1-1 | Pass |
| 10 | Determite 15 g/m³ | 1.5 | 1-1.5 | Pass |
| 11 | Determite 23 g/m³ | 1.0 | 1-1 | Pass |

House frame building practices were incorporated in a test to demonstrate the efficacy of bifenthrin superficial treatments. The ends of the samples were not treated. Simulated frames were exposed to 120,000 termites. After six months of exposure all untreated simulated frames were attacked while the treated frames were not despite signs of termite activity within the frame.

Superficial treatments can be applied for example by dipping, rolling, brushing, deluging, misting and spraying. These systems can be installed in different areas of a sawmill in-line or as a process separate to the sawmill. The situation of the spray unit will depend on the lay-out of the production line or lines of a given sawmill. A longitudinal and transversal spray unit in a sawmill is contemplated. Spraying can occur for example by application with a linear sprayer after stress grading. Timber is then arranged on a conveyor, graded and marked by hand (or automatically). Boards that are marked during grading are detected by a scanner and then cut to the appropriate length by the docker saw. Transverse spraying is an option that may occur after the docker saw operation. Ending rolls may be used to treat the ends of the boards as required.

Bifenthrin can be used as a formulated product which includes suspension concentrate, emulsion concentrate, microemulsion and as a dust. Bifenthrin can be applied in a concentrate form or diluted in a variety of carriers which may include water, organic solvent, oils from different sources, diesel, gasoline, petroleum and other non polar solvents.

Additives can be incorporated during the application of bifenthrin, for example colors, fire retardants, water repellents and resins. Table 4 demonstrates that the addition of water repellents did not mask the repellent effect of bifenthrin against Coptotermes acinaciformis.

**Table 4**

| Mean scores for radiata pine commercial samples treated superficially with bifenthrin and water repellent and exposed to Coptotermes acinaciformis in the field | | | |
|---|---|---|---|
| Treatment | Mean^{a} rating | Range | Success (Pass or Fail) |
| Untreated control | 7.0 | 7-7 | Fail |
| Solvent control (white spirit) | 7.0^{b} | 7-7 | Fail |
| 0.007% m/m OD permethrin | 2.0 | 1-3 | Fail |
| 0.013% m/m OD permethrin | 1.8 | 1-3 | Fail |
| 0.02% m/m OD permethrin | 1.3 | 1-2 | Pass |
| Bifenthrin 4 g/m³ + water repellents | 1.2 | 1-2 | Pass |
| Bifenthrin 8 g/m³ + water repellents | 1.3 | 1-2 | Pass |
| Bifenthrin 15 g/m³ + water repellents | 1.2^{b} | 1-2 | Pass |
| Bifenthrin 23 g/m³ + water repellents | 1.2 | 1-2 | Pass |

The benefits of the invention include that:
1. Low rates of chemical usage are obtained.
2. The invention does not need expensive equipment to be applied.
3. The invention allows synthetic pyrethrins to be applied in a sawmill as an in-line process or a stand alone process.
4. The invention eliminates the operating costs associated with conventional treatments.
5. Wood treated according to the invention not required re-drying after treatment. Normal process required re-drying when the end use is framing.
6. Additives can be included in the concentrate or working solution to add different characteristics to the final product. These additives can include colors, fire retardants and water repellents.

Experiments have been conducted, to date, with radiata pine but is not exclusive of other pinus species, other softwood, hardwoods and broadleaves timber species, engineering and re-constituted wood products named for example but not exclusive plywood, Laminated Veneer Lumber, Oriented Stranded Boards (OSB), particleboards, Medium Density Boards (MDF), Glue laminated Lumber (GlueLam), flake boards and plastic-wood.

A modification of superficial treatments is the partial introduction of bifenthrin into the wood. The result of this is an envelope around the cross section of the timber board or wood product or just a partial penetration. Tests conducted following similar method described above strongly suggest that these types of treatment are also effective in protecting termites against termite attack. Table 5 shows the results of the assessment carried out in radiata pine commercial sizes partially penetrated with bifenthrin.

**Table 5**

| Mean scores for radiata pine commercial samples partially penetrate with bifenthrin and exposed to Coptotermes acinaciformis in the field | | | |
|---|---|---|---|
| Treatment | Mean^{a} rating | Range | Success (Pass or Fail) |
| Untreated control | 7.0 | 7-7 | Fail |
| Solvent control (white spirit) | 7.0^{b} | 7-7 | Fail |
| 0.007% m/m OD permethrin | 2.0 | 1-3 | Fail |
| 0.013% m/m OD permethrin | 1.8 | 1-3 | Fail |
| 0.02% m/m OD permethrin | 1.3 | 1-2 | Pass |
| Partial penetration more than 3mm. Bifenthrin 6-12 g/m³ | 1.0 | 1-1 | Pass |
| Partial penetration more than 3mm. | 1.0 | 1-1 | Pass |
| Bifenthrin 13-20 g/m³ 10 | | | |

When added protection of the faces is required, pressed products can be treated by spraying the faces before they have cooled down. The warmth in the product will create a hot-cold effect that will draw the applying solution deep into the face. Face treatments can also be applied onto a cold face. In this case we rely on the lathe checks as a pathway for the penetration of the chemical. Despite the fact that the penetration of chemical when sprayed on cold faces is not as good as when spraying on warm faces, this can be improved and probably matched to the spraying of warm face by increasing the concentration of the chemical, increasing the uptake and wetting more of the faces, adding surfactants and chemicals that help the solution penetrate the faces better.

The surface treatments of faces can be done by dipping, rolling, brushing, deluging, misting and spraying. These systems can be installed in different areas of the LVL, plywood or any other mill that produces engineered and reconstituted products in-line or as a different process. This depends of the lay-out of the production line or lines of a given mill.

## Claims

1. Use of bifenthrin as a superficial treatment in a solvent or carrier by spraying at a retention rate of radiata pine sapwood for preserving radiata pine sapwood agains Captotermes 4 to 23 grams of bifenthrin per cubic meter of acinaciformis.

2. Use of bifenthrin as a superficial treatment in a solvent or carrier by spraying at a retention rate of 23 to 38 grams of bifenthrin per cubic meter of radiata pine sapwood for preserving radiata pine sapwood against Mastotermes darwiniensis.

3. The use of claim 1 or claim 2, wherein: the treatment is a spray.

4. The use of claim 3, wherein: the spray occurs at a sawmill.

5. The use of claim 4, wherein: the spray occurs by application from a linear sprayer after stress grading.

6. The use of claim 5, further comprising the step of: a second spray of bifenthrin by way of a transverse spray after a docker saw operation.

7. The use of claim 1 or claim 2, wherein: the bifenthrin is applied as a formulated product in a carrier.

8. The use of claim 1 or claim 2, wherein: the bifenthrin further comprises an additive selected from any one of the group comprising: a colorant, a fire retardant, a water repellent or a resin.

9. The use of claim 1 or claim 2, wherein: the application occurs while the product is warmer than room temperature.

10. The use of claim 1, wherein: the application occurs by any one of the group comprising: dipping, rolling, brushing, deluging, or misting; and the concentration is between about 4 and 23g of bifenthrin per cubic meter of product.

11. The use of claim 1 or claim 2, wherein: the bifenthrin is applied without the use of the vacuum pressure to achieve penetration.

12. The use of claim 1 or claim 2, wherein the wood product is a plywood, a Laminated Veneer Lumber, an Oriented Stranded Board (OSB), a particleboard, a Medium Density Board (MDF), a Glue laminated Lumber (GlueLam), a flake board or a plastic-wood.

## Patentansprüche

1. Verwendung von Bifenthrin als eine Oberflächen-Behandlung in einem Lösungsmittel oder Träger durch Sprühen mit einer Retentionsrate von 4 bis 23 Gramm Bifenthrin pro Kubikmeter Monterey-Kiefer-Splintholz zum Konservieren bzw. Schutz von Monterey-Kiefer-Splintholz gegen Coptotermes acinaciformis.

2. Verwendung von Bifenthrin als eine Oberflächen-Behandlung in einem Lösungsmittel oder Träger durch Sprühen mit einer Retentionsrate von 23 bis 38 Gramm Bifenthrin pro Kubikmeter Monterey-Kiefer-Splintholz zum Konservieren bzw. Schutz von Monterey-Kiefer-Splintholz gegen Mastotermes darwiniensis.

3. Verwendung nach Anspruch 1 oder Anspruch 2, wobei: die Behandlung eine Sprühung ist.

4. Verwendung nach Anspruch 3, wobei: das Sprühen in einem Sägewerk stattfindet.

5. Verwendung nach Anspruch 4, wobei: das Sprühen durch Anwendung aus einem linearen Sprüher nach Belastungs-Einstufung stattfindet.

6. Verwendung nach Anspruch 5, weiterhin umfassend den Schritt von: einer zweiten Sprühung von Bifenthrin mit Hilfe einer Quersprühung nach einem Docker-Säge-Vorgang.

7. Verwendung nach Anspruch 1 oder Anspruch 2, wobei: das Bifenthrin als ein formuliertes Produkt in einem Träger appliziert wird.

8. Verwendung nach Anspruch 1 oder Anspruch 2, wobei: das Bifenthrin weiterhin ein Additiv, ausgewählt aus einem von der Gruppe, umfassend: ein Färbemittel, ein Flammenhemmungsmittel, ein Wasser abweisendes Mittel oder ein Harz, umfasst.

9. Verwendung nach Anspruch 1 oder Anspruch 2, wobei: die Applikation stattfindet, während das Produkt wärmer als Raumtemperatur ist.

10. Verwendung nach Anspruch 1, wobei: die Applikation durch eines von der Gruppe, umfassend: Tauchen, Walzen, Pinseln, Gießen bzw. Übergießen oder Nebeln, stattfindet; und die Konzentration zwischen etwa 4 und 23 g Bifenthrin pro Kubikmeter Produkt liegt.

11. Verwendung nach Anspruch 1 oder Anspruch 2, wobei: das Bifenthrin ohne die Anwendung von dem Vakuum-Druck bzw. Unterdruck, um Penetration zu erreichen, appliziert wird.

12. Verwendung nach Anspruch 1 oder Anspruch 2, wobei das Holz-Produkt ein Sperrholz, ein Lamellen-förmig angeordnetes Furnier-Blattbrett bzw. LVB [Laminated Veneer Lumber bzw. LVL], eine Grobspanplatte (OSB) [Oriented Stranded Board], eine Spanplatte [particleboard], eine mitteldichte Faserplatte (MDF) [Medium Density Board], ein Brettschichtholz (GlueLam) [Glue laminated Lumber], eine Spanplatte [flake board] oder ein Holzkitt ist.

## Revendications

1. Utilisation de bifenthrine comme traitement superficiel dans un solvant ou un véhicule par pulvérisation à un taux de rétention de 4 à 23 grammes de bifenthrine par mètre cube d'aubier du pin Radiata pour préserver l'aubier du pin Radiata contre Captotermes acinaciformis.

2. Utilisation de bifenthrine comme traitement superficiel dans un solvant ou un véhicule par pulvérisation à un taux de rétention de 23 à 38 grammes de bifenthrine par mètre cube d'aubier du pin Radiata pour préserver l'aubier du pin Radiata contre Mastotermes darwiniensis.

3. Utilisation selon la revendication 1 ou la revendication 2, dans laquelle le traitement est une pulvérisation.

4. Utilisation selon la revendication 3, dans laquelle la pulvérisation a lieu à la scierie.

5. Utilisation selon la revendication 4, dans laquelle la pulvérisation a lieu par application à partir d'un pulvérisateur linéaire après un calibrage sous contrainte.

6. Utilisation selon la revendication 5, comprenant en outre l'étape d'une seconde pulvérisation de bifenthrine au moyen d'une pulvérisation transversale après une opération de sciage portuaire.

7. Utilisation selon la revendication 1 ou la revendication 2, dans laquelle la bifenthrine est appliquée sous forme d'un produit formulé dans un véhicule.

8. Utilisation selon la revendication 1 ou la revendication 2, dans laquelle la bifenthrine comprend en outre un additif choisi parmi un quelconque élément du groupe comprenant : un colorant, un retardateur d'inflammation, un répulsif de l'eau ou une résine.

9. Utilisation selon la revendication 1 ou la revendication 2, dans laquelle l'application a lieu alors que le produit est à une température supérieure à la température ambiante.

10. Utilisation selon la revendication 1, dans laquelle l'application a lieu par un quelconque élément du groupe comprenant : l'immersion, le laminage, le brossage, l'inondation ou l'atomisation ; et la concentration est comprise entre environ 4 et 23 g de bifenthrine par mètre cube de produit.

11. Utilisation selon la revendication 1 ou la revendication 2, dans laquelle la bifenthrine est appliquée sans utilisation d'une pression de vide pour réaliser la pénétration.

12. Utilisation selon la revendication 1 ou la revendication 2, dans laquelle le produit en bois est le contreplaqué, le bois de placage stratifié, le panneau à copeaux orientés (OSB), le panneau à particules, le panneau moyenne densité (MDF), le bois lamellé-collé (lamellé-collé), le panneau à flocons ou le bois plastifié.
